# FASCICULE DE BREVET EUROPEEN

(11) **EP 1 512 580 B1**
(45) Date de publication et mention de la délivrance du brevet: **23.08.2006**
(21) Numéro de dépôt: 03020291.5
(22) Date de dépôt: 08.09.2003
(51) Int. Cl.: B60R 5/04

(54) **Dispositif cache-marchandises**
Gepäckabdeckung
Baggage cover

(43) Date de publication de la demande: 09.03.2005
(73) Titulaire: MP Vanquish S.A., 1700 Fribourg (CH)
(72) Inventeur: Penaranda, José Antonio, ES-28760 Tres Cantos (ES)
(74) Mandataire: Bugnion Genève

(56) Documents cités:
- FR-A- 2 598 994
- FR-A- 2 828 459
- US-B1- 6 312 036
- PATENT ABSTRACTS OF JAPAN vol. 010, no. 115 (M-474), 30 avril 1986 (1986-04-30) -& JP 60 244646 A (NISSAN JIDOSHA KK), 4 décembre 1985 (1985-12-04)

## Description

La présente invention se rapporte à un dispositif cache-marchandises destiné à équiper un véhicule et défini selon le préambule de la revendication 1, un tel dispositiff étant connu du document US 6,312,036 B1.

Dans certains véhicules automobiles actuels, la dépose des sièges arrière permet d'aménager à l'arrière des sièges avant du véhicule une zone de stockage de marchandises importante. Sur les véhicules équipés de cinq portes, cette zone de stockage est accessible par trois portes : les deux portes latérales arrière et le hayon arrière.

Certains véhicules utilitaires et véhicules de tourisme d'un même modèle sont construits sur la même base, mais présentent des différences d'équipements permettant de les adapter à l'utilisation qui en sera faite. Ainsi, les véhicules utilitaires présenteront par exemple à l'arrière des sièges un bac en matière plastique s'étendant sur toute la surface du plancher intérieur et définissant la partie inférieure d'une zone de stockage de marchandises.

De tels véhicules présentent, en général, également un dispositif amovible de cache-marchandises permettant de cacher les marchandises déposées dans la zone de stockage que l'on pourrait voir à travers les différentes vitres du véhicule. Un tel dispositif permet d'éviter l'effraction de véhicule par des individus désireux de s'approprier les marchandises stockées à l'intérieur du véhicule. Ce dispositif définit par conséquent une limite supérieure de la zone de stockage de marchandises.

Les dispositifs de cache-marchandises connus à ce jour sont constitués de panneaux repliables autour d'axes transversaux au véhicule. Ainsi, le chargement de marchandises par l'arrière du véhicule peut être effectué de manière plus ou moins aisée après repli du panneau arrière du cache-marchandises. Par contre, le chargement de marchandises par les portes latérales est réellement incommode. En effet, il demeure à ce niveau, un panneau ne pouvant pas être replié. Un tel dispositif cache-marchandises présente un autre inconvénient. Du fait des formes de carrosserie des véhicules modernes, la largeur de caisse au niveau du dispositif cache-marchandises est supérieure à la largeur de caisse du véhicule au niveau de son toit. Ainsi, la dimension des panneaux constituant le cache-marchandises, dans le sens transversal au véhicule, doit être sensiblement inférieure à la largeur de la caisse au niveau du cache-marchandises. Il est par conséquent nécessaire, pour que le cache-marchandises puisse assurer correctement sa fonction de prévoir de part et d'autre de ses panneaux, le long des faces latérales du véhicule des panneaux auxiliaires liés à la caisse du véhicule et s'étendant sur toute la longueur de la zone de stockage. Ces panneaux auxiliaires s'avèrent particulièrement gênants lorsqu'on veut charger des marchandises volumineuses.

On connaît d'autre part des dispositifs de cache-marchandises, permettant de résoudre certains de ces inconvénients. Ces dispositifs comprennent des panneaux articulés autour d'axes parallèles à la longueur du véhicule. Le repli de ces panneaux permet de faciliter notablement le chargement de marchandises par les portes latérales du véhicule. Cependant, ils rendent très délicat le chargement de marchandises par l'arrière du véhicule.

Les différents types de cache-marchandises décrits sont éventuellement complétés à l'arrière de la zone de stockage par un panneau oscillant autour d'un axe transversal et lié au hayon.

L'invention a pour but de réaliser un dispositif cache-marchandises palliant aux inconvénients précités et présentant une amélioration par rapport aux dispositifs connus de l'état de la technique. En particulier, l'invention propose un dispositif cache-marchandises facilitant le chargement des marchandises. Ce dispositif permet notamment un chargement aisé de marchandises par les portes latérales et par la porte arrière du véhicule.

Pour atteindre ce but, le dispositif cache-marchandises selon l'invention est caractérisé par la partie caractérisante de la revendication 1.

Les revendications dépendantes 2 à 9 définissent différents modes de réalisation du dispositif selon l'invention.

La revendication 10 définit un véhicule comprenant un dispositif selon l'invention.

Le dessin annexé représente, à titre d'exemple, un mode de réalisation du dispositif cache-marchandises selon l'invention.

La figure 1 est une vue arrière en perspective du dispositif cache-marchandises selon l'invention.

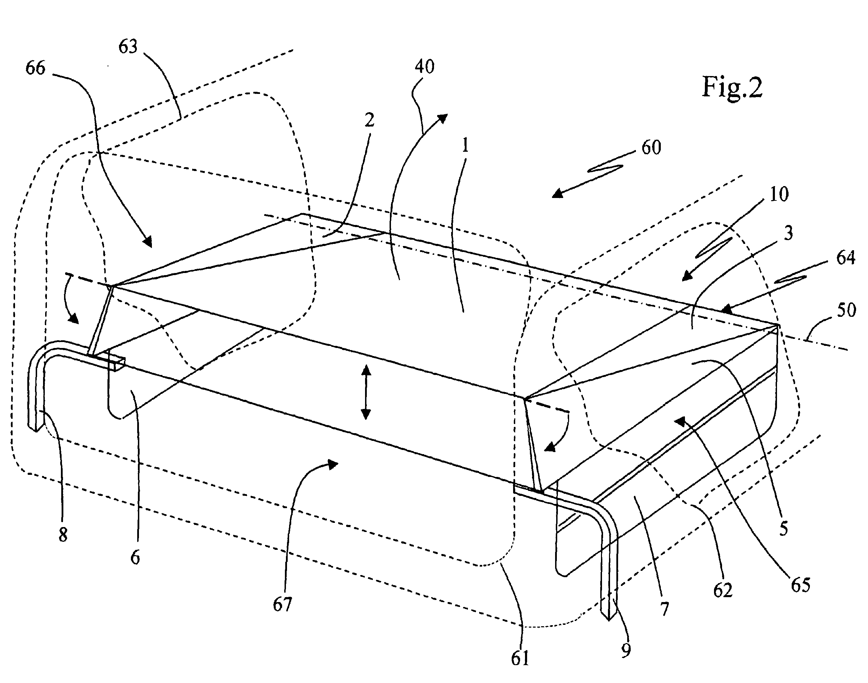

La figure 2 est une vue arrière en perspective du dispositif cache-marchandises selon l'invention, dont la partie arrière est soulevée pour permettre le chargement de marchandises par le hayon arrière.

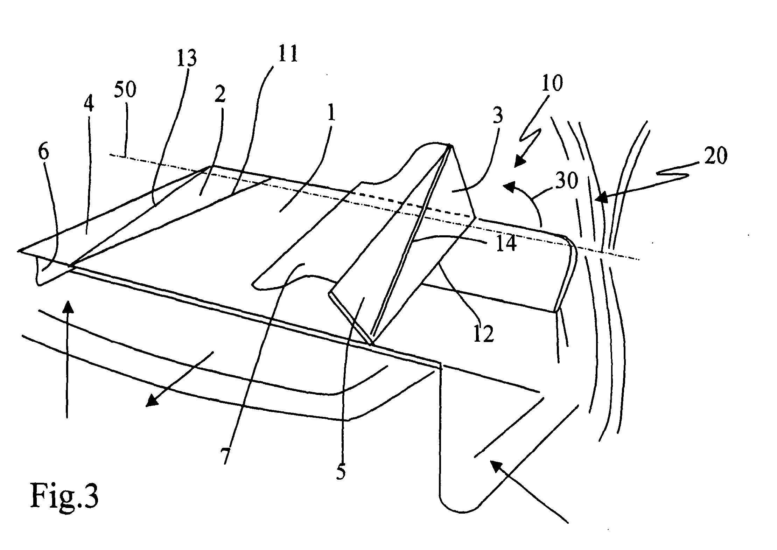

La figure 3 est une vue arrière en perspective du dispositif cache-marchandises selon l'invention, dont le panneau latéral droit est soulevé pour permettre le chargement de marchandises par la porte latérale droite.

La figure 4 est une vue en coupe longitudinale du dispositif cache-marchandises détaillant son mode de liaison à la caisse du véhicule.

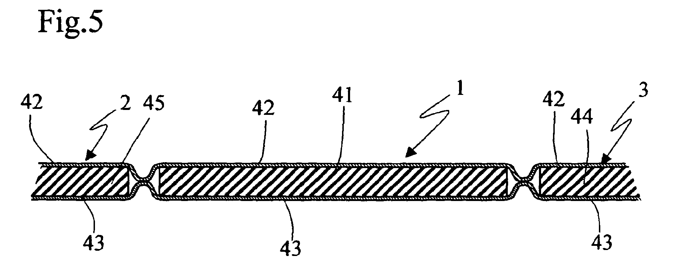

La figure 5 est une vue en coupe transversale des panneaux constituant le dispositif cache-marchandises et détaillant la structure des panneaux et leur mode de liaison.

La figure 6 est une vue en perspective du dispositif cache-marchandises dont les panneaux ont été repliés pour son rangement derrière les sièges avant du véhicule.

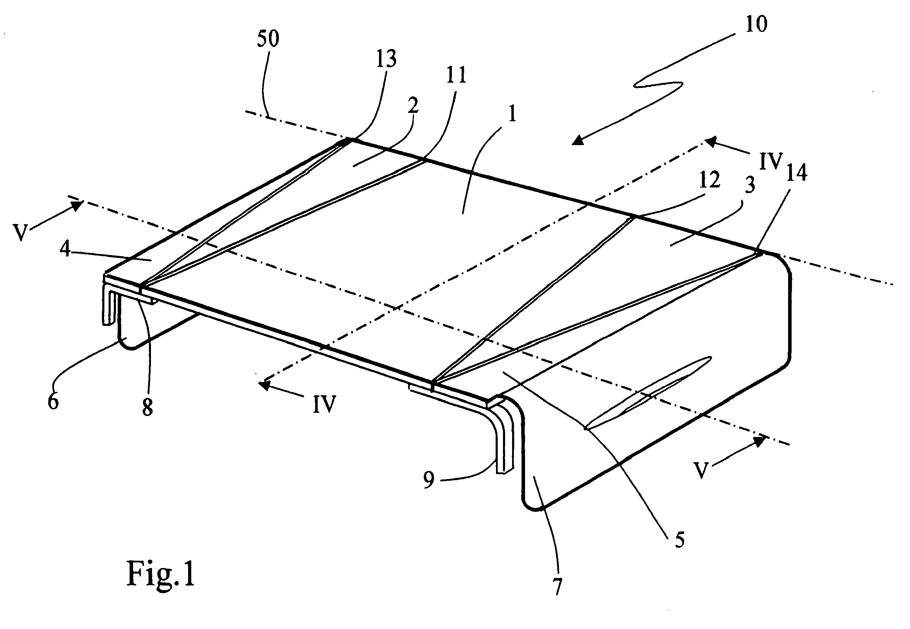

Le dispositif cache-marchandises 10 représenté à la figure 1 comprend principalement cinq panneaux référencés 1 à 5. Ces cinq panneaux constituent un ensemble sensiblement plan destiné à être disposé à l'arrière des sièges arrière d'un véhicule 60 de tourisme ou d'un véhicule utilitaire dont les sièges avant ont été enlevés. Ces panneaux sont disposés à distance du plancher du véhicule, de manière sensiblement parallèle à celui-ci. Une zone de stockage 64 comprise entre le plancher du véhicule et les panneaux et sensiblement parallélépipédique est ainsi définie. Les faces latérales 65 et 66 de cette zone de stockage sont accessibles par les portes latérales 62 et 63 du véhicule et sa face arrière par le hayon arrière 61 du véhicule. Les panneaux s'étendant sensiblement au-dessus de toute la surface du plancher, les marchandises stockées dans la zone de stockage ne sont pas visibles au travers des vitres des portes du véhicule.

Les cinq panneaux sont liés entre eux par des articulations. Un panneau central, dit panneau principal 1, a une forme trapézoïdale. La petite base du trapèze se trouve à l'avant de la zone de stockage et la grande base à l'arrière. Le long de chacun des deux autres côtés du trapèze est articulé un panneau auxiliaire 2 respectivement 3 de forme triangulaire. La liaison du panneau principal 1 au panneau auxiliaire 3 est référencée 12 et la liaison du panneau principal 1 au panneau auxiliaire 2 est référencée 11. Le panneau auxiliaire 3 est également lié à un panneau latéral 5 au niveau de son côté opposé à celui par lequel il est lié au panneau principal 1. De même, le panneau auxiliaire 2 est également lié à un panneau latéral 4 au niveau de son côté opposé à celui par lequel il est lié au panneau principal 1. Ces deux panneaux latéraux 4, 5 ont chacun une forme sensiblement triangulaire. Leurs côtés opposés à leurs côtés par lesquels ils sont liés aux panneaux auxiliaires présentent un profil adapté à la caisse du véhicule. La liaison du panneau auxiliaire 3 au panneau latéral 5 est référencée 14 et la liaison du panneau auxiliaire 2 au panneau latéral 4 est référencée 13.

Au niveau des côtés des panneaux latéraux présentant un profil adapté à la caisse du véhicule peuvent être fixées des joues 6 et 7 réalisées en un matériau souple pendant sensiblement jusqu'au plancher du véhicule sous leur propre poids.

Les différents panneaux sont par exemple réalisés en bois aggloméré 43. Ils peuvent être réalisés en tout matériau rigide. Les surfaces inférieures et de ces panneaux sont de préférence recouvertes d'un matériau souple de revêtement inférieur 43. Les surfaces supérieures et de ces panneaux sont de préférence recouvertes d'un matériau souple de revêtement supérieur 41. Ces matériaux souples sont liés entre eux tout autour des panneaux par exemple par couture et/ou par collage. Ces matériaux souples de revêtement peuvent par exemple consister en de la moquette, en du cuir naturel ou synthétique ou en du tissu.

Les liaisons pivot 11, 12, 13, 14 entre les panneaux sont réalisées par la déformation des matériaux souples de revêtement au niveau de leur couture et/ou collage. Ces liaisons pourraient être assurées par tout autre moyen tel que des charnières.

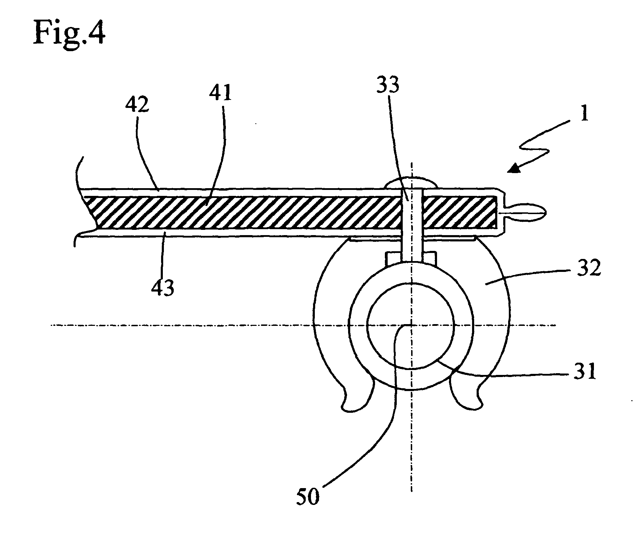

Les différents panneaux 1, 2, 3, 4, 5 reposent sur une structure liée à la caisse du véhicule. A l'avant, une barre transversale 31 s'étend transversalement d'un côté à l'autre de la caisse. Cette barre 31, représentée à la figure 4, consiste en un tube cylindrique métallique matérialisant l'axe 50. Deux bagues fendues 32, fixée à l'avant de ce panneau par l'intermédiaire de vis 33 assurent la liaison du panneau principal à la barre 31. Ces bagues sont réalisées en un matériau élastique tel qu'une matière plastique. Elles sont mises en position sur la barre transversale 31 par déformation élastique (clipsage). Une fois en place, elles lient le panneau principal 1 à la barre tout en autorisant un mouvement relatif de ces éléments autour de l'axe transversal 50. Les panneaux auxiliaires 2 et 3 reposent également sur cette barre transversale 31. Ils viennent pour leur part simplement en appui contre cette barre sous leur propre poids. Ils peuvent alternativement ou complémentairement être clipsés sur la barre transversale 31.

A l'arrière, les panneaux viennent en appui sous leur propre poids contre des équerres 8 et 9 fixées aux parois latérales de la caisse du véhicule ou avantageusement fixées aux crochets d'arrimage du dossier des sièges arrière du véhicule. Les parties horizontales des équerres sont suffisamment longues pour venir s'étendre jusque sous le panneau principal 1, sur une longueur de quelques centimètres. Les parties horizontales des équerres doivent être les moins longues possible afin de ne pas gêner le chargement de marchandises dans le véhicule.

Lorsque l'on souhaite charger des marchandises dans la zone de stockage par le hayon arrière du véhicule, après ouverture du hayon, on soulève l'arrière du panneau principal 1 qui pivote autour de l'axe 50. Les panneaux auxiliaires 2 et 3 en contact contre le tube 31 suivent le même mouvement que le panneau principal 1. Les panneaux latéraux 4 et 5 pivotent quant à eux sous leur propre poids autour des articulations 13 et 14. Ces panneaux glissent ainsi sur la partie supérieure des équerres. Lorsque leurs bords arrières sont sensiblement perpendiculaires au bord arrière du panneau principal 1, ceux-ci permettent de maintenir le panneau principal en position relevée. A cet effet, les surfaces supérieures des parties horizontales des équerres peuvent présenter des dentures ou un coefficient de frottement important avec les panneaux latéraux.

Lorsqu'on souhaite charger des marchandises dans la zone de stockage par la porte latérale arrière droite, après ouverture de la porte, on replie le panneau auxiliaire 3 et le panneau latéral 5 sur le panneau principal 1.

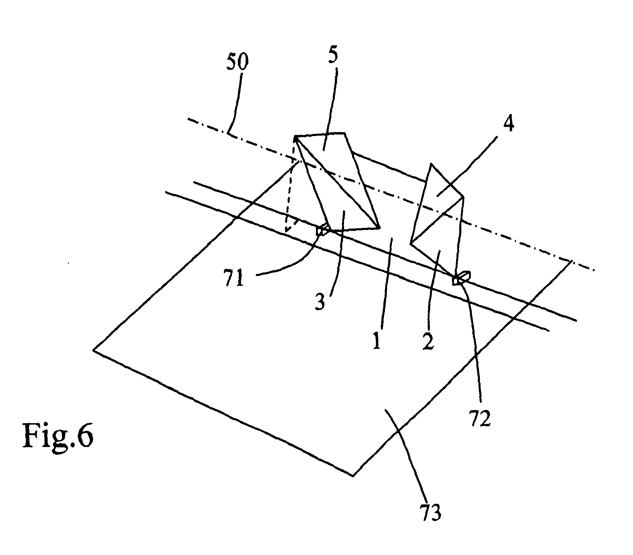

Comme représenté à la figure 6, lorsqu'on veut charger des marchandises présentant un gros volume, le dispositif cache-marchandise peut être démonté. Ses panneaux latéraux et auxiliaires 2, 3, 4 et 5 sont alors repliés sur le panneau principal 1 pour minimiser son encombrement. Dans cette configuration, le dispositif peut être glissé entre la barre transversale 31 d'axe 50 et les sièges avant du véhicule. Le dispositif repose alors, d'une part, sur le plancher 73 du véhicule entre deux plots 71 et 72 positionnant latéralement le dispositif et, d'autre part, sur la barre transversale 31. Les plots ne sont pas nécessairement liés au plancher. Il peuvent notamment être liés à la paroi avant d'un bac en matière plastique définissant la zone de stockage de marchandises.

Le dispositif cache-marchandises décrit précédemment équipe un véhicule dont la zone de stockage des marchandises se trouve à l'arrière des sièges avant. Ce dispositif cache-marchandises pourrait cependant tout aussi bien équiper un véhicule présentant une zone de stockage de marchandises située à un autre endroit dans le véhicule.

## Revendications

1. Dispositif cache-marchandises (10) pour véhicule (60) comprenant une zone de stockage de marchandises (64) sensiblement parallélépipédique accessible par deux portes latérales (62, 63) situées au niveau de deux faces opposées (65, 66) de la zone de stockage dites latérales et par une troisième porte (61) dite arrière située au niveau d'une troisième face (67) de la zone de stockage adjacente aux deux faces latérales (65, 66) et définissant l'arrière de la zone de stockage, et comprenant un panneau principal (1) auquel sont liés deux panneaux auxiliaires (2, 3) par deux articulations (11, 12) dont les axes sont obliques par rapport au faces latérales de la zone de stockage, le panneau principal (1) et les panneaux auxiliaires (2, 3) étant articulés autour d'un axe (50) sensiblement perpendiculaire aux faces latérales et situé à l'avant de la zone de stockage, **caractérisé en ce que** les axes de ces articulations (11, 12) se croisent et avant de la zone de stockage, et **en ce que** ces panneaux auxiliaires (2, 3) sont liés à deux panneaux latéraux (4, 5) par deux articulations (13, 14) dont les axes sont obliques par rapport au faces latérales de la zone de stockage et se croisent en arrière de la zone de stockage.

2. Dispositif cache-marchandises (10) selon la revendication 1, **caractérisé en ce que** le panneau principal (1) présente des bagues fendues (32) destinées à être assemblées par déformation élastique ou clipsage à un tube cylindrique (31) lié à la caisse du véhicule et matérialisant l'axe d'articulation (50) sensiblement perpendiculaire aux faces latérales (65, 66), ces bagues fendues (32) assurant le maintien du panneau principal (1) sur le tube cylindrique (31) et sa rotation autour de ce tube.

3. Dispositif cache-marchandises (10) selon l'une des revendications précédentes, **caractérisé en ce qu'**il est repliable pour être rangé dans le véhicule.

4. Dispositif cache-marchandises (10) selon l'une des revendications précédentes, **caractérisé en ce qu'**une joue (7, 8) en matériau souple est liée à chacun des panneaux latéraux (4, 5) le long de leur coté opposé à l'articulation aux panneaux auxiliaires (2, 3).

5. Dispositif cache-marchandises (10) selon l'une des revendications précédentes, **caractérisé en ce que** les faces inférieures et supérieures des panneaux (1, 2, 3, 4, 5) sont recouvertes d'un matériau souple de revêtement inférieur (43) et d'un matériau souple de revêtement supérieur (42), les degrés de liberté de rotation des panneaux entre eux étant assurés par déformation des matériaux souples de revêtement.

6. Dispositif cache-marchandises (10) selon la revendication 5, **caractérisé en ce qu'**autour de chaque panneau, le matériau souple de revêtement inférieur (43) et le matériau souple de revêtement supérieur (42) sont assemblés l'un à l'autre par collage et/ou par couture.

7. Dispositif cache-marchandises (10) selon l'une des revendications précédentes, **caractérisé en ce que** les panneaux latéraux (4, 5) et le panneau principal (1) reposent, à l'arrière de la zone de stockage, sur des équerres (8, 9) liées latéralement à la caisse du véhicule.

8. Dispositif cache-marchandises (10) selon la revendication 7, **caractérisé en ce que** les équerres (8, 9) sont liées à la caisse du véhicule par l'intermédiaire de crochets destinés à arrimer les dossiers des sièges arrière du véhicule.

9. Dispositif cache-marchandises (10) selon l'une des revendications précédentes, **caractérisé en ce qu'**il présente des plots (71, 72) permettant de positionner les panneaux (1, 2, 3, 4, 5) lorsque ceux-ci sont repliés et rangés dans le véhicule.

10. Véhicule (60), **caractérisé en ce qu'**il comprend un dispositif (10) selon l'une des revendications précédentes.

## Claims

1. Luggage cover (10) device for a vehicle (60), comprising an essentially parallelepiped shaped luggage storing zone (64) that is accessible through two lateral doors (62, 63) situated on the level of two opposed lateral faces (65, 66) of the storing zone, called side faces, and through a third door (61) called rear door, situated on the level of a third face (67) of the storage zone contiguous to the two lateral faces (65, 66) and defining the rear portion of the storing zone, and further comprising a main board (1) to which two auxiliary boards (2, 3) are linked through two articulations (11, 12) whose axes are oblique with respect to the lateral faces of the storing zone, the main board (1) and the auxiliary boards (2, 3) being articulated about an axis (50) essentially perpendicular to the side faces and situated in the front portion of the storing zone, **characterised in that** the axes of these articulations (11, 12) intersect in front of the storing zone, and that the auxiliary boards (2, 3) are connected to two lateral boards (4, 5) through two articulations (13, 14) whose axes are oblique to the side faces of the storing zone and intersect behind the storing zone.

2. Luggage cover device (10) according to claim 1, **characterised in that** the main board (1) has split rings (32) provided for being assembled by elastic deformation or clipping to a cylindrical tube (31) linked to the body of the vehicle and implementing the articulation axis (50) essentially parallel to the side faces (65, 66), said split rings (32) securing the holding of the main board (1) to the cylindrical tube (31) and its rotation about this tube.

3. Luggage cover device (10) according to any one of the preceding claims, **characterised in that** it is foldable for being stowed away in the vehicle.

4. Luggage cover device (10) according to any one of the preceding claims, **characterised in that** a flap (7, 8) made of a soft material is linked to each of the lateral boards (4, 5) alongside of their side that is opposed to the articulation of the auxiliary boards (2, 3).

5. Luggage cover device (10) according to any one of the preceding claims, **characterised in that** the lower and upper sides of the boards (1, 2, 3, 4, 5) are covered by a lower soft cover material (43) and a upper soft cover material (42), the degrees of mutual rotation freedom of the boards being ensured through a deformation of the soft cover materials.

6. Luggage cover device (10) according to claim 5, **characterised in that** the lower soft cover material (43) and the upper soft cover material (42) are assembled together around each board by sealing and/or sewing.

7. Luggage cover device (10) according to any one of the preceding claims, **characterised in that** the side boards (4, 5) and the main board (1) rest on corner brackets (8, 9) laterally fastened to the end portion of the body of the vehicle.

8. Luggage cover device (10) according to claim 7, **characterised in that** the corner brackets (8, 9) are linked to the body of the vehicle through hooks provided for securing the backs of the rear seats of the vehicle.

9. Luggage cover device (10) according to any one of the preceding claims, **characterised in that** it is equipped with studs (71, 72) allowing to position the boards (1, 2, 3, 4, 5) when they are folded back and stowed in the vehicle.

10. Vehicle (60), **characterised in that** it comprises a device (10) according to one of the preceding claims.

## Patentansprüche

1. Abdeckvorrichtung für Waren (10) in einem Fahrzeug (60), mit einem Ladebereich für Waren (64), der im wesentlichen quaderförmig ist und durch zwei seitliche Öffnungen (62, 63) zugänglich ist, die sich auf der Höhe zweier einander gegenüberliegenden Seiten (65, 66) des Ladebereiches befinden und als Seitenzugänge bezeichnet werden, sowie über einen dritten Zugang (61), als hinterer Zugang bezeichnet, der sich in Höhe einer dritten Seite (67) des Ladebereiches seitlich benachbart an die beiden Seitenwandungen (65, 66) anschliesst und den hinteren Abschluss des Ladebereiches definiert, und wobei die Vorrichtung eine Hauptplatte (1) aufweist, mit welcher zwei Hilfsplatten (2, 3) über zwei Gelenke (11, 12) verbunden sind, deren Achsen in Bezug auf die Seitenflächen des Ladebereiches schräg verlaufen, wobei die Hauptplatte (1) und die Hilfsplatten (2, 3) um eine Achse (50) angelenkt sind, die im wesentlichen senkrecht auf den Seitenflächen steht und sich vorn am Ladebereich befindet, **dadurch gekennzeichnet, dass** sich die Achsen dieser Gelenke (11, 12) vor dem Ladebereich kreuzen, und dass die Hilfsplatten (2, 3) über zwei Gelenkverbindungen (13, 14) an zwei Seitenplatten (4, 5) angebracht sind, deren Achsen gegenüber den Seitenflächen des Ladebereiches schräg verlaufen und sich hinter dem Ladebereich schneiden.

2. Vorrichtung zur Abdeckung (10) gemäss Patentanspruch 1, **dadurch gekennzeichnet, dass** die Hauptplatte (1) offene Ringe (32) aufweist, die dazu bestimmt sind, durch federnde Deformation oder Einklipsen in ein zylindrisches Rohr (31) an letzterem angebracht zu werden, wobei das Rohr an der Fahrzeugkarosserie befestigt ist und die Gelenkachse (50) materialisiert, welche im wesentlichen senkrecht zu den Seitenflächen (65, 66) verläuft, und wobei die offenen Ringe (32) die Verbindung der Hauptplatte (1) mit dem zylindrischen Rohr (31) und ihre Rotation um dieses Rohr gewährleisten.

3. Vorrichtung zur Abdeckung (10) gemäss einem der vorstehenden Ansprüche, **dadurch gekennzeichnet, dass** sie zwecks Verstauen im Fahrzeug zusammenlegbar ist.

4. Vorrichtung zur Abdeckung (10) nach einem der vorstehenden Ansprüche, **dadurch gekennzeichnet, dass** eine Wange (7, 8) aus nachgiebigem Material an jeder Seitenplatte (4, 5) entlang derjenigen Seite verbunden ist, die der Gelenkverbindung mit den Hilfsplatten (2, 3) gegenüberliegt.

5. Vorrichtung zur Abdeckung (10) nach einem der vorstehenden Ansprüche, **dadurch gekennzeichnet, dass** die Unterseite und die Oberseite der Platten (1, 2, 3, 4, 5) mit einem unteren Überzug aus nachgiebigem Material (43) und einem oberen Überzug (42) aus einem nachgiebigen Material versehen sind, wobei die Freiheitsgrade des Verschwenkens der Platten gegeneinander durch die Verformung der nachgiebigen Überzugsmaterialien gewährleistet ist.

6. Vorrichtung zur Abdeckung (10) gemäss Anspruch 5, **dadurch gekennzeichnet, dass** das nachgiebige Material des unteren Überzugs (43) und das nachgiebige Material des oberen Überzugs (42) um jede Platte durch Verkleben und/oder durch Vernähen miteinander verbunden sind.

7. Vorrichtung zur Abdeckung (10) gemäss einem der vorstehenden Ansprüche, **dadurch gekennzeichnet, dass** die Seitenplatten (4, 5) und die Hauptplatte (1) im Hinterbereich des Ladebereiches auf Winkelkonsolen (8, 9) ruhen, die seitlich an der Karosserie des Fahrzeuges befestigt sind.

8. Vorrichtung zur Abdeckung (10) gemäss Anspruch 7, **dadurch gekennzeichnet, dass** die Winkelkonsolen (8, 9) über Haken mit der Karosserie verbunden sind, die dazu bestimmt sind, an den Rückenlehnen der Hintersitze des Fahrzeuges anzugreifen.

9. Vorrichtung zur Abdeckung (10) nach einem der vorstehenden Ansprüche, **dadurch gekennzeichnet, dass** Blöcke (71, 72) vorhanden sind, welche die Position der Platten (1, 2, 3, 4, 5) festlegen, wenn letztere zusammengelegt und im Fahrzeug verstaut werden.

10. Fahrzeug (60), **dadurch gekennzeichnet, dass** es eine Vorrichtung (10) nach einem der vorstehenden Ansprüche aufweist.
